# EUROPÄISCHE PATENTANMELDUNG

(11) **EP 2 950 171 A1**
(43) Veröffentlichungstag der Anmeldung: **02.12.2015**
(21) Anmeldenummer: 14170102.9
(22) Anmeldetag: 27.05.2014
(51) Int. Cl.: G05B 19/05, G05B 19/042

(54) **Verfahren und industrielle Steuerung zur Ermittlung der Energieaufnahme von Automatisierungskomponenten**

(71) Anmelder: Siemens Aktiengesellschaft, 80333 München (DE)
(72) Erfinder: Mantel, Martin, 91452 Wilhermsdorf (DE)

(57) **Zusammenfassung**

Die Erfindung betrifft ein Verfahren und eine industrielle Steuerung zur Ermittlung der Energieaufnahme von Automatisierungskomponenten, wobei die Automatisierungskomponenten jeweils durch Steuerungsausgänge gesteuert werden, und wobei der Zustand jedes Steuerungsausgangs durch jeweils eine Zustandsvariable bestimmt oder abgebildet wird. Dabei wird für jede Automatisierungskomponente aus dem Wert der jeweiligen Zustandsvariablen und aus einer Angabe über einen Nennwert für die Energieaufnahme der jeweiligen Automatisierungskomponente, jeweils ein Wert für die Energieaufnahme der jeweiligen Automatisierungskomponente errechnet, wobei die errechneten Werte zu einem Gesamtwert summiert werden, und wobei der Gesamtwert als ermittelte Energieaufnahme auf einer Anzeige zur Verfügung gestellt wird. Dadurch kann flexibel und dynamisch die Energieaufnahme von beliebigen Teilen einer Automatisierungsanordnung feingranular ermittelt werden, wobei die Installation zusätzlicher Hardware, insbesondere von einer Vielzahl von Energiemessgeräten oder Leistungsmessgeräten, eingespart werden kann.

## Beschreibung

Die Erfindung betrifft ein Verfahren zur Ermittlung der Energieaufnahme einer Anzahl Automatisierungskomponenten einer industriellen Automatisierungsanordnung gemäß dem Oberbegriff des Patentanspruchs 1, und eine industrielle Steuerung zur Ausführung des Verfahrens gemäß Patentanspruch 6.

In industriellen Automatisierungsanordnungen hat das Energiemanagement heutzutage einen hohen Stellenwert. Eine wichtige Zustandsgröße ist dabei die Energieaufnahme der Automatisierungsanordnung, wobei in erster Linie die elektrische Energieversorgung betrachtet wird. Üblicherweise wird für eine gesamte Automatisierungsanordnung oder zumindest für Teilanlagen die tatsächlich konsumierte elektrische Leistung permanent überwacht, um beispielsweise Lastspitzen zu erkennen, Lastmanagement zu betreiben, Angaben über Kosten zu sammeln etc. Dazu werden regelmäßig Leistungsmessgeräte eingesetzt, wobei je nach Granularität der benötigten Informationen entsprechend viele Leistungsmessgeräte eingesetzt werden müssen, die zu dem üblicherweise alle mit einem Lastmanagement-Rechner oder einer ähnlichen Einrichtung vernetzt werden müssen.

Die Erfassung der Energie erfolgt also üblicherweise mit Energiemessgeräten, die ihre Messwerte einer übergeordneten Steuerung, Verarbeitungseinrichtung, Visualisierungseinrichtung, Energiemanagement-Einrichtung oder dergleichen melden, wobei die Daten dann dort ausgewertet oder visualisiert werden. Solche Energiemessgeräte sind zum einen kostspielig, und werden zum anderen zum regulären Betrieb der Automatisierungsanordnungen oder -anlagen nicht zwingend benötigt. Zudem kann eine nachträgliche Installation solcher Messgeräte sehr aufwändig sein und zudem meist auch nicht im laufenden Betrieb erfolgen. Aus diesen Aufwandsgründen wird häufig auf eine Optimierung und damit auch auf eine detaillierte Erfassung des Energieverbrauchs oder der Leistungsaufnahme verzichtet.

Mit steigender Granularität, z.B. räumlicher oder funktioneller "Auflösung" der benötigten Angaben über die Energieaufnahme der Automatisierungsanordnung bzw. der Teilanlagen oder Teilprozesse steigen auch die Kosten für die Hardware, Software und den Betrieb der dazu erforderlichen Messtechnik. Um diese Kosten zu verringern, ist es üblich, die Erfassung der Energieaufnahme auf Teilanlagen, beispielsweise einzelne Produktionslinien, zu beschränken, wobei für untergeordnete Komponenten eine Schätzung vorgenommen werden kann, welchen Anteil diese an der Gesamt-Energieaufnahme der jeweiligen Teilanlage oder Produktionslinie jeweils haben könnten. Ein anderer Weg besteht darin, die Energieaufnahme der Automatisierungskomponenten im Rahmen einer mathematischen Simulation vorauszusagen, wobei die Genauigkeit der Simulation zum einen durch die Genauigkeit der zugrundeliegende Modelle begrenzt ist, und zum anderen keine temporären Einflüsse, die in der Praxis immer auftreten können, berücksichtigt werden können.

Es ist daher eine Aufgabe der vorliegenden Erfindung, eine verbesserte Methode zur Erfassung der Energieaufnahme einer industriellen Automatisierungsanordnung bzw. von Teilen einer solchen vorzuschlagen.

Es ist dabei ein Kerngedanke der Lösung dieser Aufgabe, die Erfassung der dynamisch benötigten Energiemengen einer Maschine oder einer Automatisierungsanordnung durch eine Steuerungs-Software der jeweiligen steuernden industriellen Steuerung (beispielsweise PLC = Programmable Logic Controller) durchzuführen, wobei im laufenden Betrieb die jeweilige Steuerungsinformation zur Aktivierung bzw. Steuerung der jeweiligen Komponenten zusammen mit Daten (z.B. Nennwerte einer elektrischen Leistung) über die Betriebszustands-abhängige Leistungsaufnahme der jeweils angesteuerten Automatisierungskomponenten zur Ermittlung der Energieaufnahme der jeweiligen Automatisierungskomponenten zur Ermittlung der Energieaufnahme eines betrachteten Anlagenteils bestehend aus einer Vielzahl von Automatisierungskomponenten zu verwenden.

Die Aufgabe wird insbesondere durch ein Verfahren nach Patentanspruch 1 und durch eine industrielle Steuerung nach Patentanspruch 6 gelöst.

Dabei wird ein Verfahren zur Ermittlung der Energieaufnahme einer Anzahl Automatisierungskomponenten einer industriellen Automatisierungsanordnung vorgeschlagen, wobei die Automatisierungskomponenten jeweils durch Steuerungsausgänge zumindest einer industriellen Steuerung gesteuert werden, wobei der Zustand jedes Steuerungsausgangs durch jeweils zumindest eine Zustandsvariable bestimmt oder in dieser Zustandsvariablen abgebildet wird. Dabei wird für jede für die Energieaufnahme zu betrachtende Automatisierungskomponente aus dem jeweiligen Wert der Zustandsvariablen des zugeordneten Steuerungsausgangs und aus einer Angabe über einen Nennwert für die Energieaufnahme der jeweiligen Automatisierungskomponente jeweils ein Wert für die Energieaufnahme der jeweiligen Automatisierungskomponente errechnet. Dabei werden die errechneten Werte für die jeweilige Energieaufnahme der zu betrachtenden Automatisierungskomponenten zu einem Gesamtwert summiert, wobei der Gesamtwert als ermittelte Energieaufnahme einem Anzeige- oder Verarbeitungsmittel (z.B. Energiemanagementsystem) zur Verfügung gestellt wird. Durch den Einsatz eines solchen Verfahrens kann flexibel und dynamisch die Energieaufnahme von beliebigen Teilen einer Automatisierungsanordnung feingranular ermittelt werden, wobei der Einsatz zusätzlicher Hardware, insbesondere von einer Vielzahl von Energiemessgeräten oder Leistungsmessgeräten, eingespart werden kann.

Die Aufgabe wird außerdem durch eine industrielle Steuerung für eine industrielle Automatisierungsanordnung gelöst, wobei die industrielle Steuerung mit einem Software-Paket zur Realisierung des vorstehend beschriebenen Verfahrens ausgerüstet ist. Durch eine solche industrielle Steuerung können die bereits anhand des Verfahrens erläuterten Vorteile realisiert werden.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für die erfindungsgemäße industrielle Steuerung. Die Merkmale und Verfahrensschritte, die in den abhängigen Patentansprüchen angegeben sind, können dabei sowohl einzeln, als auch in Kombination miteinander vorteilhaft angewendet werden.

In einer vorteilhaften Ausgestaltung wird die Energieaufnahme einer einzelnen Automatisierungskomponente durch diejenige industrielle Steuerung ermittelt, an der die jeweilige Automatisierungskomponente angeschlossen ist bzw. von der diese industrielle Automatisierungskomponente angesteuert wird. Dabei ist vorteilhaft ein erster Funktionsbaustein im Betriebsprogramm zur Summierung oder Aggregation der errechneten Werte für die Energieaufnahme einiger oder aller der an die jeweilige Steuerung angeschlossenen Automatisierungskomponenten bzw. von dieser Steuerung angesteuerten Automatisierungskomponenten vorgesehen. Damit ist die Zusammenführung aller Werte der Energieaufnahme aus Einzelprozessen oder einzelnen Komponenten ("Verbrauchern") in einem Block zusammengefasst ("gekapselt"). Dieser erste Funktionsbaustein oder ein weiterer, von diesem ersten Funktionsbaustein mit Daten versorgter weiterer Funktionsbaustein, kann dabei (auch) zur Bereitstellung des Gesamtwertes oder der aggregierten Daten (z.B. eine Tabelle mit Informationen über eine Vielzahl Automatisierungskomponenten) als ermittelte Energieaufnahme vorgesehen sein. Außerdem kann dabei vorteilhaft noch ein weiterer, sog. "zweiter Funktionsbaustein" zur Ermittlung der Werte der Zustandsvariablen der jeweiligen Steuerungsausgänge der zu betrachtenden Automatisierungskomponenten und zur Bereitstellung der dabei ermittelten Werte für den ersten Funktionsbaustein vorgesehen sein, so dass der Zugriff auf die Zustandsvariablen, die den Steuerungsausgängen zugeordnet sind, ebenfalls in einem einzigen Funktionsbaustein gekapselt werden kann. Durch die Kapselung der erfindungsgemäßen Funktionen in einigen wenigen Funktionsbausteinen können auch bereits bestehende Automatisierungsprogramme einfach und sicher mit der erfindungsgemäßen Funktionalität erweitert werden; zudem erleichtert diese Architektur die Wartung der für die Ausführung der Erfindung verwendeten Programmteile.

In einer vorteilhaften Variante ist das Verfahren zur Ermittlung des Energieaufwandes (Energiemenge) bezogen auf ein einzelnes Werkstück oder einen einzelnen Produktionsprozess oder der Bearbeitung einer einzelnen Charge eines Prozesses in der Prozessautomatisierung eingerichtet. Dazu wird vorgeschlagen, das Verfahren zur Ermittlung der für die Produktion oder Bearbeitung eines einzelnen Werkstückes aufgewendeten Energiemenge einzurichten, wobei für jede zur Produktion oder Bearbeitung des Werkstücks oder der Charge oder dergleichen benutzte Automatisierungskomponente die jeweilige Energieaufnahme über die jeweilige Produktions- oder Bearbeitungsdauer zu jeweils einer Einzel-Energiemenge integriert wird, und wobei die ermittelten Einzel-Energiemengen zur für das jeweilige Werkstück oder dgl. aufgewendeten Energiemenge summiert werden. Vorteilhaft wird aus der ermittelten Energiemenge und aus zumindest einer Kenngröße für den Energiemix der Energie, die der Automatisierungsanordnung zugeführt wird, ein sogenannter CO₂-Footprint für das jeweilige hergestellte Werkstück oder die jeweils hergestellte Charge oder dergleichen ermittelt. Damit ist es möglich, eine Produktionseinrichtung oder Automatisierungsanordnung auch unter Gesichtspunkten des Umweltschutzes zu analysieren, um damit auch diesbezüglich eine Optimierung zu ermöglichen.

Ausführungsbeispiele des erfindungsgemäßen Verfahrens werden nachfolgend diskutiert. Diese Ausführungsbeispiele dienen gleichzeitig zur Erläuterung einer erfindungsgemäßen industriellen Steuerung.

Zur Ermittlung der Energieaufnahme einer einzelnen Automatisierungskomponente wird zumindest eine Angabe über einen Nennwert für die Energieaufnahme der jeweils betrachteten Automatisierungskomponente benötigt. Im einfachsten Fall ist das eine (zumeist elektrische) Nennleistung, beispielsweise die Angabe, dass ein Heizelement zur Beheizung eines Kessels oder dergleichen im eingeschalteten Zustand eine Energieaufnahme von 10kW hat. Sofern diese Heizung digital angesteuert wird, also nur die Zustände "ein" und "aus" zur Ansteuerung dieses Heizelementes verwendet werden, ergibt die Multiplikation der entsprechenden Zustandsvariable des benutzten digitalen Ausganges der industriellen Steuerung, die "1" oder "0" (oder "true" oder "false") betragen kann, mit dem Nennwert der elektrischen Leistung sofort die tatsächlich aufgenommene Energie des Heizelementes. Zudem ergibt eine einfache Multiplikation des Nennwertes der elektrischen Leistung mit der Einschaltdauer die konsumierte Energiemenge. Entsprechend kann bei einer stufenlosen Ansteuerung des Heizelementes, beispielsweise über einen PWM-Ausgang (PWM = Puls-Wechsel-Modulation) der Modulationsgrad mit der elektrischen Nennleistung multipliziert werden, um die tatsächlich jeweils konsumierte elektrische Leistung und damit die elektrische Energieaufnahme zu ermitteln. Für elektrische "Verbraucher" aus dieser Kategorie kann also ein linearer oder zumindest stetiger mathematischer Zusammenhang zwischen der Stellgröße (Zustand des Steuerungsausgangs) und der Energiemenge, also der Leistungsaufnahme, angenommen werden, wobei die "verbrauchte" Energiemenge dann mit einfachen mathematischen Mitteln berechnet werden kann.

In vielen Fällen sind jedoch die Automatisierungskomponenten mit einer komplexeren Ansteuerung versehen. Beispielsweise können Aktoren über eine PID-Regelung mit analogen oder geschalteten/getakteten Ausgängen angesteuert werden, Antriebe können über Bussysteme angesteuert oder geregelt werden etc. Für solche Ansteuerungen sind in üblichen Automatisierungssystemen sogenannte "Technologieobjekte" vorgesehen, in denen der entsprechende Regelalgorithmus, Ansteueralgorithmus oder dergleichen gekapselt ist. Solche "Technologieobjekte" sind in der Software einer industriellen Steuerung meist in Funktionsbausteinen gekapselt, wobei diese erfindungsgemäß zur direkten Verwertung der erzeugten Stellgrößen für die Berechnung der Energieaufnahme der damit gesteuerten Objekte versehen werden können. Solche Daten können gesammelt und dann einem Anwender zur Verfügung gestellt werden, oder für weitere Zwecke eines Energiemanagements, einer Energie-Überwachung oder dergleichen genutzt werden.

Für die eingangs erwähnten "einfachen" Betriebsmittel, die über digitale Ausgänge (Zustände "ein" und "aus") angesteuert werden, können die erforderlichen Zustandsinformationen zusammengefasst in einem einzelnen Funktionsbaustein gesammelt, erfasst und ausgewertet werden. Für einen solchen Funktionsbaustein kann eine Tabelle oder eine andere Informationseinheit vorgesehen werden, in die nicht nur die jeweils gültigen Zustände eingetragen werden, sonder die auch für jedes damit angesteuerte Objekte oder Automatisierungskomponente eine Kenngröße für die elektrische Nennleistung oder dergleichen bereithält.

Der Zusammenhang zwischen einem Zustandsparameter, also beispielsweise einer Drehzahlvorgabe für einen elektrischen Lüfter oder dergleichen, und der dabei von dieser Komponente jeweils aufgenommenen elektrischen Leistung, kann erfindungsgemäß auch durch Eingabe einer Berechnungsformel erfolgen. Das ist insbesondere dann nützlich, wenn der Zusammenhang zwischen Stellgröße und Leistungsaufnahme nichtlinear ist. In einer weiteren Ausgestaltung können auch Kennlinien, Kennfelder oder die Stützpunkte einer Leistungskurve eingegeben werden, wobei im letztgenannten Fall die Auswertesoftware eine Interpolation zwischen den Stützpunkten vornehmen kann.

Bei geregelten Antrieben kann die tatsächlich aufgenommene Leistung über die Drehzahl, das Drehmoment und den Wirkungsgrad berechnet werden; in einer alternativen Ausführungsform kann ein Antriebsumrichter auch über ein Bussystem die tatsächliche Leistungsaufnahme zurückmelden, so dass in einem solchen Fall in einer Gesamtbetrachtung sowohl errechnete Werte für eine Energieaufnahme als auch durch einzelne Komponenten ermittelte und zurückgemeldete Werte über die tatsächliche Energieaufnahme miteinander verknüpft werden können.

In einer vorteilhaften Ausgestaltung wird nicht nur die momentane Energieaufnahme einzelner Anlagenteile errechnet und bezogen auf eine Teileanlage oder eine Anzahl von Automatisierungskomponenten summiert, sondern auch werkstückbezogen über die Zeit integriert, womit also werkstückbezogen eine aufgenommene Energiemenge ermittelt werden kann. So kann beispielsweise bei der Bearbeitung eines Werkstückes für dieses Werkstück eine Variable "Energiemenge" definiert sein, wobei bei jedem Bearbeitungsschritt für dieses Werkstück die in der jeweiligen Bearbeitungsstation aufgewendete Energiemenge zu dieser Variablen addiert wird. So ist es beispielsweise möglich, anhand der dabei ermittelten Werte über die aufgewendete Energiemenge verschiedene Anlagenteile und unterschiedliche Produktionslinien miteinander zu vergleichen und durch weitere Analyse der Daten das Gesamtsystem zu optimieren. Außerdem ist es dadurch möglich, für jedes Werkstück, jede produzierte Charge oder eine ähnliche Einheit ein CO₂-Äquivalent oder einen CO₂-Footprint zu ermitteln. Dazu wird zunächst eine Angabe benötigt, die den Zusammenhang zwischen CO₂-Emmission und aufgenommener Energiemenge beschreibt, also beispielsweise wie viel Gramm CO₂ pro Kilowattstunde elektrischer Leistung beim jeweils betrachteten Energiemix freigesetzt wird. Auch nicht-elektrische Anlageteile, beispielsweise Heizungen mit fossilen Energieträgern, können dabei in die produktbezogene Berechnung der CO₂-Belastung eingerechnet werden.

Erfindungsgemäß wird vorgeschlagen, die Energieaufnahme oder die Energiemenge in einer industriellen Automatisierungsanordnung nicht detailliert messtechnisch zu erfassen, sondern durch eine Software zu errechnen, die als Eingangsgröße die ohnehin im System vorhandenen Informationen über die jeweiligen Zustände der Automatisierungskomponenten oder "Verbraucher" auswertet. Durch diesen systematischen, ganzheitlichen Ansatz kann sich die Erfassung somit sowohl auf die gesamte Anlage/Maschine beziehen, als auch einzelne Komponenten getrennt betrachten, die beispielsweise an der Bearbeitung oder Produktion eines einzelnen Produktes beteiligt sind. Damit können eine Vielzahl einzelner Energiemessgeräte, die im Stand der Technik für eine solche Erfassung erforderlich sind, erfindungsgemäß eingespart werden.

## Patentansprüche

1. Verfahren zur Ermittlung der Energieaufnahme einer Anzahl Automatisierungskomponenten einer industriellen Automatisierungsanordnung,
wobei die Automatisierungskomponenten jeweils durch Steuerungsausgänge zumindest einer industriellen Steuerung gesteuert werden, und
wobei der Zustand jedes Steuerungsausgangs durch jeweils zumindest eine Zustandsvariable bestimmt oder in dieser Zustandsvariablen abgebildet wird,
**dadurch gekennzeichnet,**
- **dass** für jede für die Energieaufnahme zu betrachtende Automatisierungskomponente aus dem jeweiligen Wert der Zustandsvariablen des zugeordneten Steuerungsausgangs und aus einer Angabe über einen Nennwert für die Energieaufnahme der jeweiligen Automatisierungskomponente jeweils ein Wert für die Energieaufnahme der jeweiligen Automatisierungskomponente errechnet wird,
- **dass** die errechneten Werte für die jeweilige Energieaufnahme der zu betrachtenden Automatisierungskomponenten zu einem Gesamtwert summiert werden, und
- **dass** der Gesamtwert als ermittelte Energieaufnahme einem Anzeige- oder Verarbeitungsmittel zur Verfügung gestellt wird.

2. Verfahren nach Patentanspruch 1,
**dadurch gekennzeichnet,**
**dass** die Energieaufnahme durch die industrielle Steuerung ermittelt wird, wobei ein erster Funktionsbaustein im Betriebsprogramm zur Summierung der errechneten Werte und zur Bereitstellung des Gesamtwertes als ermittelte Energieaufnahme vorgesehen wird.

3. Verfahren nach Patentanspruch 2,
**dadurch gekennzeichnet,**
**dass** ein zweiter Funktionsbaustein zur Ermittlung der Werte der Zustandsvariablen der jeweiligen Steuerungsausgänge der zu betrachtenden Automatisierungskomponenten und zur Bereitstellung der Werte für den ersten Funktionsbaustein vorgesehen wird.

4. Verfahren nach einem der vorhergehenden Patentansprüche, **dadurch gekennzeichnet,**
**dass** das Verfahren zur Ermittlung der für die Produktion oder Bearbeitung eines einzelnen Werkstückes aufgewendete gesamten Energiemenge eingerichtet ist,
wobei für jede zur Produktion oder Bearbeitung des Werkstücks genutzte Automatisierungskomponente die jeweilige Energieaufnahme über die jeweilige Produktions- oder Bearbeitungsdauer zu jeweils einer Einzel-Energiemenge integriert und die Einzel-Energiemengen zur aufgewendeten gesamten Energiemenge summiert werden.

5. Verfahren nach Patentanspruch 4,
**dadurch gekennzeichnet,**
**dass** aus der ermittelten gesamten Energiemenge und zumindest einer Kenngröße für den Energiemix der der Automatisierungsanordnung zugeführten Energie ein CO₂-Footprint für das jeweilige Werkstück errechnet wird.

6. Industrielle Steuerung für eine industrielle Automatisierungsanordnung,
**dadurch gekennzeichnet,**
**dass** die industrielle Steuerung mit einem Software-Paket zur Realisierung eines der vorstehend beschriebenen Verfahren ausgerüstet ist.
